# EUROPEAN PATENT APPLICATION

(11) **EP 4 632 839 A1**
(43) Date of publication of application: **15.10.2025**
(21) Application number: 25169279.4
(22) Date of filing: 08.04.2025
(51) Int. Cl.: H01M 4/14, H01M 4/21, H01M 4/62, H01M 4/04, H01M 4/73, H01M 10/12

(54) **RUBBER ADDITIVE IN LEAD ACID BATTERIES**

(30) Priority: 09.04.2024 US 202463631589 P
(71) Applicant: Trojan Battery Company LLC, Santa Fe Springs, CA 90670 (US)
(72) Inventor: ANDERSON, Jon, Santa Fe Springs, 90670 (US); PENG, Shawn, Santa Fe Springs, 90670 (US); PEREZ LOPEZ, Jesus, Santa Fe Springs, 90670 (US); VERDE, Michael, Santa Fe Springs, 90670 (US)
(74) Representative: Leonhard, Frank Reimund

(57) **Abstract**

Suggested is a lead-acid battery (10,200) including at least one positive plate (70), at least one negative plate (90), an active material paste (60,80), and an electrolyte (40). The positive plate comprises a positive electrode grid, the negative plate comprises a negative electrode grid and the active material paste includes a rubber additive. A suggested process of manufacturing an active material paste for a lead-acid battery includes: adding a rubber additive into a paste mixer with a lead compound to form a mix of additives; dry mixing the additives to form a dry mixture; adding water to the dry mixture; wet-mixing the water with the dry mixture to form a wet mixture; and pasting and curing an electrode grid with the wet mixture.

## Description

### BACKGROUND

This disclosure relates to battery technology and components specifically used in lead acid batteries.

Lead acid batteries, including a) deep discharge batteries such as flooded or vented lead acid batteries (VLA) and b) sealed or valve regulated lead acid batteries (VRLA) such as Absorbent Glass Mat (AGM) type and gel type batteries, are comprised of a housing containing positive and negative electrode plates, with separators in between. These components are immersed in an acidic electrolyte solution, most often consisting of aqueous sulfuric acid (H₂SO₄). The positive and negative plates may include a grid electrode of lead alloyed with antimony, calcium, tin, or a combination of several alloy additive metals, to which a paste of lead oxide, sulfuric acid, and water is typically applied. In deep discharge batteries, antimony is generally preferred to form the alloy with lead. In sealed batteries, tin and calcium are normally used.

To form the battery after assembly, a charge is applied, which converts the lead (Pb), lead oxide (PbO), tri-basic lead sulfate (3PbO.PbSO₄.H2O) or tetrabasic lead sulfate (4PbO.PbSO₄) of the positive side to lead dioxide (PbO₂) and the lead (Pb), lead oxide (PbO) and tri-basic lead sulfate (3PbO.PbSO₄.H2O) of the negative side to spongy lead. In a charged battery, the chemical energy is stored in the lead on the negative electrode and the lead dioxide on the positive electrode, along with the aqueous sulfuric acid. Following formation, a lead-acid battery can be repeatedly discharged and charged. When discharged, the positive and negative electrodes react with the sulfuric acid to form lead (II) sulfate (PbSO₄). A large portion of the sulfuric acid is consumed and becomes primarily water when electrodes are being fully discharged; however, it returns to the aqueous solution when the battery is charged. The chemical reaction that occurs at the negative electrode is as follows:

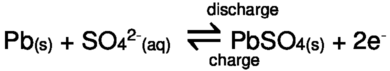

The chemical reaction that occurs at the positive electrode is as follows:

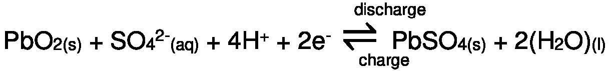

VLA and VRLA cells have the same chemistry, aside from the fact that the electrolyte is immobilized in VRLA cells. In AGM type cells, the electrolyte is immobilized using a fiberglass mat and in gel type cells, the electrolyte is immobilized using a paste-like gel that is formed by adding silica and other gelling agents to the electrolyte.

VLA batteries have thick, lead-based electrodes that are submerged in an excess of acid electrolyte. This type of battery requires certain maintenance. Some charging conditions may generate hydrogen and oxygen gas, along with the consumption of water in the electrolyte. Therefore, VLA batteries need to be vented and have water occasionally added to them. This process may affect the specific gravity of the electrolyte, which must be periodically measured using a hydrometer, and undergo equalization to maintain desired values. VRLA batteries do not require such maintenance but are generally more expensive than VLA batteries and require special chargers.

In VRLA batteries, the gases that are generated are retained within the battery if the pressure remains within safe levels. The gases can then recombine within the VRLA battery, sometimes using a catalyst, and no additional electrolyte is needed. However, a pressure relief valve is included in VRLA batteries, which will be activated and opened if the pressure exceeds safety limits to allow excess gases to escape and regulate the pressure back to safe levels.

VRLA batteries can be oriented in a horizontal position, unlike VLA batteries, which must stay upright to avoid acid spills and to keep the plates' orientation vertical. Therefore, while most VLA and VRLA cells are formed with the plates oriented vertically, VRLA cells may then be operated with the plates oriented horizontally, which may allow for improved cycle life.

After a lead-acid battery goes through multiple cycles, a battery's positive electrode plate's active materials may slowly degrade during its normal operation. This degradation may be a result of active material shedding or mossing.

Active material shedding occurs when the bond between the active material and to the plate grid weakens, causing a small portion of the active material to fall to the bottom of the battery, thus reducing its overall capacity. The accumulation of active material at the base of a battery will eventually lead to battery failure, either due to the complete shedding of the active material or through the accumulation of the active material at the bottom of the casing, which may bridge to and short with the opposing charged plates within the battery.

Battery mossing occurs when active material builds up on the edges or at the bottom of the electrodes. Mossing occurs at a slow rate but in time may cause a short circuit between the electrodes. Mossing is worsened from overcharging, rough handling, or due to normal motion and vibration when installed in mobile equipment. If a battery is shorted, the battery will be discharged very quickly and will heat up due to the high current flow.

It is a drawback of VLA batteries that the antimony can leach or migrate out of the positive electrode. Once the antimony is deposited on the surface of negative electrode, it can depolarize the potential of the negative electrode, which is associated with over-gassing, and cause the battery's positive electrode to be easily overcharged, leading to accelerated corrosion. This will undesirably shorten the battery life.

It is known that when using natural rubber separators in flooded lead acid batteries, the natural degradation and leaching of some of the compounds naturally suppresses the migration of antimony. A conventional separator is formulated from natural rubber, amorphous silica, sulfur, and other materials. Rubber is known to be an effective barrier to prevent or delay the antimony from leaching from the positive electrode to the negative electrode. This effect of antimony suppression is a well-recognized property of the material. Natural rubber can be added to non-rubber-based separators as a component to impart the suppression properties to the non-rubber (i.e., polyethylene) separators.

There are numerous drawbacks to the use of a natural rubber separator, however, including poor integration of the hydrated silica filler, resulting in pinholes, low porosity, poor permeability, and high electrical resistance. Furthermore, when the natural rubber separator is immersed in the acidic electrolyte of a lead-acid battery, it may oxidize and crack. When a rubber separator cracks, lead dendrites can grow from the negative to the positive electrode, thus causing the battery to short circuit.

Additionally, inherent material impurities or alloyed constituents reduce the long-term performance of both types of lead-acid batteries by reducing the service life of VRLA batteries and by increasing the maintenance of VLA batteries due to increased water loss.

### SUMMARY

The present disclosure overcomes lead-acid battery performance and degradation issues by adding a rubber mixture to the active material paste of both VLA and VRLA batteries. The active material paste with the rubber additive optimizes the paste morphology and microstructure and stabilizes the structures for longer periods of time, thereby improving the initial capacity and service life of lead-acid batteries.

Some embodiments of the present disclosure are directed to an improved active material paste for a flooded deep discharge lead-acid battery of the type that includes lead-antimony alloy positive electrode grids. Such an active material paste may include lead oxide, a metal sulfate additive, and sulfuric acid. Natural rubber may be used as an additive to the active material paste. The rubber may be Ribbed Smoked Sheet (RSS) rubber and may be Standard Indonesian Rubber (SIR).

In an embodiment, a cross-linked rubber material powder is used as a direct additive to the active material of the battery electrodes to provide similar properties to the active materials.

Another application of the present disclosure is to use the additive within VRLA products, which can be significantly impacted by impurities within the active materials. As the VRLA battery is a closed system, the impact of impurities can significantly reduce service life and require high purity materials be used in the manufacture of the materials within the battery. The potential suppression of impurities would allow for both longer service life and/or the use of lower grade materials in the battery manufacturing process.

In VLA products, the use of a cross-linked rubber additive provides greater suppression of both antimony in antimonial products and imparts greater resistance in non-rubber separators over the life of the battery system.

Some embodiments of the present disclosure provide the ability to deliver the relative compounds from the active material over time (leaching effect) and protect the electrodes from initial oxidation during the manufacturing process rather than extracting the organic compounds and adding them directly where the conditions of the electrolyte and electrodes may destroy, degrade, or reduce the effectivity of additives.

Some embodiments of the present disclosure regulate the leaching effect by controlling particle size and the amount of the rubber additive in the electrodes.

Some embodiments of the present disclosure provide protection from the oxidizing effects at the positive electrode.

In some embodiments, the disclosed lead-acid battery includes at least one positive plate, at least one negative plate, an active material paste, and an electrolyte. The positive plate comprises a positive electrode grid, the negative plate comprises a negative electrode grid and the active material paste comprises a rubber additive.

In some embodiments, the active material paste comprising a rubber additive is pressed onto the positive plate.

In some embodiments, the active material paste comprising a rubber additive is pressed onto the negative plate.

In some embodiments, the rubber additive is a natural rubber. In other embodiments, the rubber additive is a composite rubber.

In some embodiments, the rubber additive is powdered vulcanized cross-linked rubber.

In some embodiments, the active material paste also comprises amorphous silica and sulfur.

In some embodiments, the lead-acid battery is a vented lead acid battery (VLA).

In some embodiments, the lead-acid battery is a valve regulated lead acid battery (VRLA).

In some embodiments, the range of weight percent for the rubber additive is between 0.01% up to 5% of the oxide load.

In some embodiments, the rubber additive has a particle size of 0.01 micrometers to 1000 micrometers.

In some embodiments, the plate for a lead-acid battery includes an electrode grid made primarily of lead and a paste comprising a lead compound and rubber additive.

In some embodiments, the disclosed positive plate for a lead-acid battery includes a positive electrode grid made primarily of lead and a positive paste comprising a lead compound and rubber additive.

In some embodiments, the disclosed negative plate for a lead-acid battery includes a negative electrode grid made primarily of lead and a negative paste comprising a lead compound and rubber additive.

In some embodiments, the disclosed process of manufacturing an active material paste for a lead-acid battery includes: directly adding a rubber additive into a paste mixer with a lead compound to form a mix of additives; dry mixing the additives to form a dry mixture; adding water to the dry mixture; wet-mixing the water with the dry mixture to form a wet mixture; and pasting and curing an electrode grid with the wet mixture.

In some embodiments, the pasting and curing of an electrode grid with the wet mixture in the disclosed process includes pressing the wet mixture onto a positive electrode.

In some embodiments, the pasting and curing of an electrode grid with the wet mixture in the disclosed process includes pressing the wet mixture onto a negative electrode.

In some embodiments, the rubber additive in the disclosed process is a natural rubber. In other embodiments, the rubber additive in the disclosed process is a composite rubber.

In some embodiments, the rubber additive in the disclosed process is powdered vulcanized cross-linked rubber.

In some embodiments, the active material paste in the disclosed process also comprises amorphous silica and sulfur.

In some embodiments, the disclosed process of manufacturing an active material paste for a lead-acid battery further comprises forming a vented lead acid battery (VLA).

In some embodiments, the disclosed process of manufacturing an active material paste for a lead-acid battery further comprises forming a valve regulated lead acid battery (VRLA).

In some embodiments, the range of weight percent for the rubber additive in the disclosed process is between 0.01% up to 5% of the oxide load.

In some embodiments, the rubber additive in the disclosed process has a particle size of 0.01 micrometers to 1000 micrometers.

The above and other features, elements, characteristics, steps, and advantages of the present disclosure will become more apparent from the following detailed description of preferred embodiments of the present disclosure with reference to the attached drawings.

### BRIEF DESCRIPTION OF THE DRAWINGS

Figure 1 is a schematic sectional view of a flooded deep cycle lead-acid battery according to one embodiment of the present disclosure.
Figure 2 is a cross-sectional view of an AGM type battery according to one embodiment of the present disclosure.
Figure 3 is a chart analyzing mixed wet positive paste with a rubber additive in accordance with some embodiments of this disclosure prior to curing, as compared to a control paste without the rubber additive.
Figure 4 is a chart analyzing the β PbO in cured paste with a rubber additive in accordance with some embodiments of this disclosure, as compared to a control paste that does not include the rubber additive.
Figure 5 is a chart analyzing the half-cell voltage (with Hg/H2SO4 reference electrode) formation data comparing cells with a rubber additive included in the positive active material in accordance with some embodiments of this disclosure, as compared to a control cell that does not include the rubber additive in the positive active material.
Figure 6 is a graph analyzing the half-cell voltage (with Hg/H2SO4 reference electrode) formation data comparing cells with a rubber additive included in the negative active material in accordance with some embodiments of this disclosure, as compared to a control cell that does not include the rubber additive in the negative active material.
Figures 7A and 7B are graphs analyzing the half-cell potential, measured with Hg/H2SO4 reference electrode, during charging comparing cells with a rubber additive included in the positive and negative active material respectively, in accordance with some embodiments of this disclosure, as compared to a control cell that does not include the rubber additive in the positive and negative active material, respectively.
Figure 8 is a graph analyzing the cycle life of cells with a rubber additive in the active material in accordance with some embodiments of this disclosure, as compared to a control cell that does not include the rubber additive in the active material.
Figure 9 is a graph analyzing the cycle life of cells with a rubber additive in the positive active material in accordance with other embodiments of this disclosure, as compared to a control cell that does not include the rubber additive in the active material.

### DETAILED DESCRIPTION

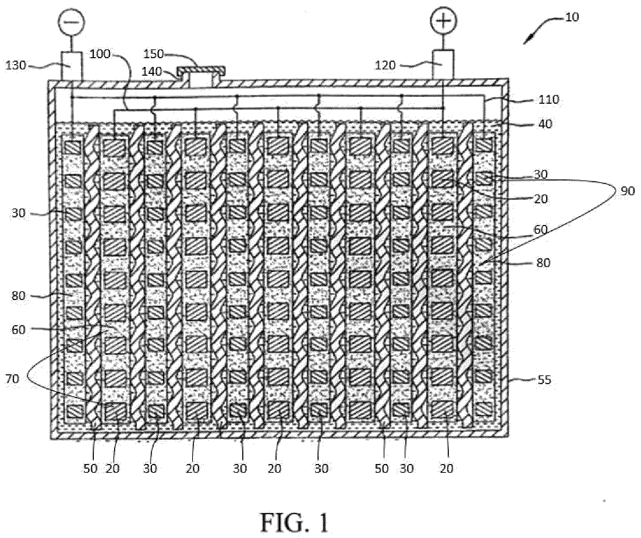

Figure 1 illustrates one embodiment of the disclosure. Flooded deep cycle lead-acid battery 10 includes positive electrode grids 20 and negative electrode grids 30 and electrolyte solution 40. Separators 50 separate the positive electrode grids 20 and negative electrode grids 30 within battery case 55. Positive electrode grids 20 are each coated with positive active material paste 60 to form a positive plate 70. Negative electrode grids 30 are each coated with negative active material paste 80 to form a negative plate 90. The positive electrode grids 20 are connected via a positive current collector 100 and the negative electrode grids 30 are connected via a negative current collector 110. Positive and negative battery terminal posts 120, 130 extend from the battery to provide external electrical contact points for charging and discharging the battery. The battery 10 includes a vent 140 to release excess gas that is produced during charge cycles. A vent cap 150 prevents the electrolyte solution from spilling out of the battery 10. It should be clear to one of ordinary skill in the art that the disclosure can be applied to both single and multiple cell batteries.

In some embodiments, the electrolyte solution 40 includes an aqueous acid solution. Further, in some embodiments, the electrolyte solution 40 includes sulfuric acid (H₂SO₄).

The electrode grids 20, 30 are primarily formed of lead and may be alloyed with antimony, calcium, or tin, or with other combination of alloy additive metals. The positive and negative active material pastes include lead dioxide and spongy lead, respectively.

According to one embodiment, the positive electrode grids 20 are made from a lead-antimony alloy. In one embodiment, the electrode grids 20 are alloyed with about 2 weight percent to about 11 weight percent antimony. In another embodiment, the electrode grids 20 are alloyed with between about 2 weight percent and about 6 weight percent antimony. The negative electrode grids 30 are similarly made from an alloy of lead and antimony but include less antimony than the alloy used for the positive electrode grids.

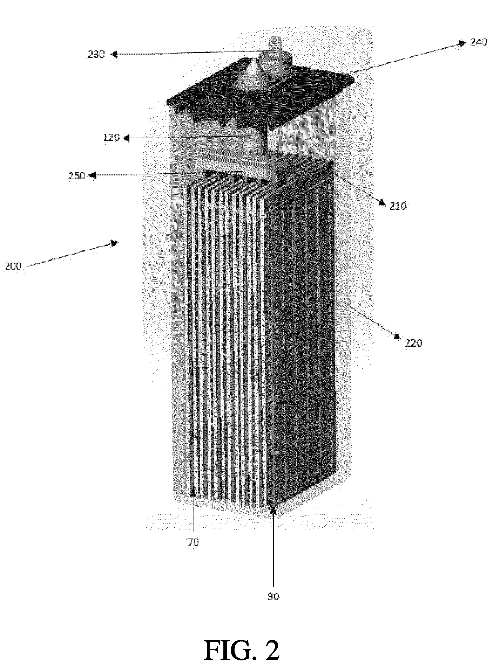

Figure 2 illustrates another embodiment of the disclosed disclosure. As discussed, VLA and VRLA cells have the same chemistry, aside from the fact that the electrolyte is immobilized in VRLA cells. VRLA-AGM type battery 200 includes positive plate 70 and negative plate 90. AGM separators 210 separate the positive plate 70 and negative plate 90 within battery case container 220. Terminal post 120 extends from the battery to terminal 230 on case cover 240 to provide external electrical contact points for charging and discharging the battery. Cast-on-Strap (COS) 250 connects the plates 70. A pressure relief valve (not shown) is included in AGM type battery 200 to allow excess gases to escape and regulate the pressure inside battery 200.

According to an embodiment, powdered cross-linked rubber, such as vulcanized rubber, is included as an additive in the active material used to define the positive and negative electrode paste 60, 80. In some embodiments, the rubber additive is natural rubber. In other embodiments, the rubber is a composite rubber. The rubber additive may be included with other raw materials and additives used within the paste mixing process and may be a direct constituent in the active materials. In some embodiments, the rubber additive is included with amorphous silica and sulfur. The silica may be used like a skeleton with rubber surrounding it and water may create porosity. The rubber additive may be mixed with over saturated sulfur under 180°F. The rubber additive can be included in about 0.01% up to about 5% by weight, depending on particle size. Particle sizes can range from 0.01 micrometers to 1000 micrometers. The powder density may be 0.2685 gr/cm³. The particle size and surface area of the rubber additive regulate the rate of leaching of the beneficial compounds into the active material and the battery system. The batteries can be produced using conventional processes once the negative and positive electrode plates 70, 90 are made with active material paste 60, 80 using the rubber additive.

The paste preparation process for positive plates 70 and negative plates 90 results in particles of definite shape and composition. These particles are spread on the electrode grids 20, 30, cured to interlock the particles into a porous mass, and converted electrochemically into active material to produce the electrode plates 70, 90 of the lead acid battery cells 10. The plates 70, 90 then have an active surface, definite porosity, and a hard active mass with connection to the grid. The porosity of the active materials is determined by the size of the paste particles.

Paste mixing may consist of two stages: dry mixing and wet mixing. The dry mixing mixes the dry lead oxide with positive paste additives or negative paste additives. The lead oxide may be composed of PbO and Pb produced by a ball milling or Barton milling process. The type and amount of additives depends on the specific formula used, which may differ between manufacture and application. After all ingredients have been uniformly mixed, a defined volume of water is added into the mixer to start the wet mixing process. When uniformity has been reached, a certain volume of sulfuric acid, with a defined specific gravity, may be added into the mixer to continue mixing until the final paste-like material has been achieved with a targeted paste density, viscosity, or other required properties. During the whole process, the amount of time spent on each step will be controlled, and peak temperature will be controlled.

In some embodiments, the rubber additive may be added in the paste mixing process. Further, in some embodiments, the rubber additive may be added into a paste mixer with lead oxide before dry mixing. Water may then be added to the dry mixture and the mixture may be wet-mixed for a certain amount of time. After wet-mixing, acid is added and mixing continues.

The paste 60, 80 may then be placed in a pasting machine, which will press the paste 60, 80 onto the electrode grids 20, 30 respectively. The paste 60, 80 may be pressed into the empty space around the wires in the electrode grid 20, 30 respectively.

In some embodiments, the electrode grids 20, 30 are primarily made of lead but are combined with antimony.

Once pasted, the electrode grids 20, 30 are referred to as plates 70, 90. Rollers may flatten the plate 70, 90 surfaces. Plates 70, 90 may then be cured to form an uninterrupted, strong porous mass that is tightly bound to grids 20, 30 respectively. During the curing process, small crystals in the paste may dissolve while big crystals may grow. Water between the particles may evaporate, resulting in tribasic lead sulfate (3BS) or tetrabasic lead sulfate (4BS) crystals and PbO particles interconnecting to form a strong skeleton. At curing temperatures above 150°F, 3BS may be converted into 4BS paste.

The curing process may consist of two stages: the wet stage and the drying stage. During the wet stage, the curing chamber will maintain a certain temperature (in some embodiments 90F-180° F) with high relative humidity (in some embodiments over 90% and in some embodiments even higher than 95%). The wet curing stage can last from a few hours to tens of hours, depending on the different manufacture processes. The drying stage may be used to fully dry the paste 60, 80 on the plate 70, 90 respectively. This stage may have very low relative humidity (RH) and last from around 10 hours to over 40 hours, depending on plate design and production process design. During the different stages, the paste 60, 80 compositions will change due to chemical reactions, including recrystallization processes; the grid alloy will be oxidized, and a corrosion layer (CL) will be established between paste and grid 20, 30 surfaces. The lead acid battery 10 may then be assembled and formed by applying a charge, which converts the cured paste of the positive side (3PbO.PbSO₄.H2O, 4PbO.PbSO₄, PbO, Pb) to PbO₂ and the cured paste of the negative side (3PbO.PbSO₄.H2O, PbO, Pb) to spongy lead.

In accordance with some embodiments of this disclosure, inclusion of the rubber additive in the active electrode material may suppress the influence of impurities in lead-acid batteries. Controlling the particle size of the rubber additive may control the release of the compounds that directly influence performance of the electrodes. Using the non-toxic, non-metallic rubber additive may control the influence of antimony or impurities in the battery system.

Examples:

To evaluate the function of rubber additives in flooded lead-acid batteries, examples of 2V cells were built with a Trojan positive plate (100T) and a Trojan negative plate (80T). The 2V cells include electrode grids made with a PbSb alloy. In one example, a rubber additive of 0.5% and 2% by weight of the total oxide weight were added to paste materials used in both positive and negative electrode plates according to Table 1. Each sample group included three cells (Cell #1, Cell #2, Cell #3). Cell #1 was torn down after formation. Cell #2 and Cell #3 were used for capacity evaluation and life cycling test. During the formation and testing, the half-cell potential (voltage) was monitored.

**Table 1.**

| **Sample Group** | **Plate type: Positive / Negative** | **Rubber Additive Weight Percent of Oxide Load** |
|---|---|---|
| SG-1 (Mix-1 Positive Active Material Additive) | Positive Plate | 0.5%, lab made plate |
| | Negative Plate | Control Plate, production |
| SG-2 (Mix-2 Positive Active Material Additive) | Positive Plate | 2%, lab made plate |
| | Negative Plate | Control Plate, production |
| SG-3 (Mix-3 Negative Active Material Additive) | Positive Plate | Control Plate, production |
| | Negative Plate | 0.5%, lab made plate |
| SG-4 (Mix-4 Negative Active Material Additive) | Positive Plate | Control Plate, production |
| | Negative Plate | 2%, lab made plate |
| SG-5 (Control) | Positive Plate | Control Plate, production |
| | Negative Plate | Control Plate, production |

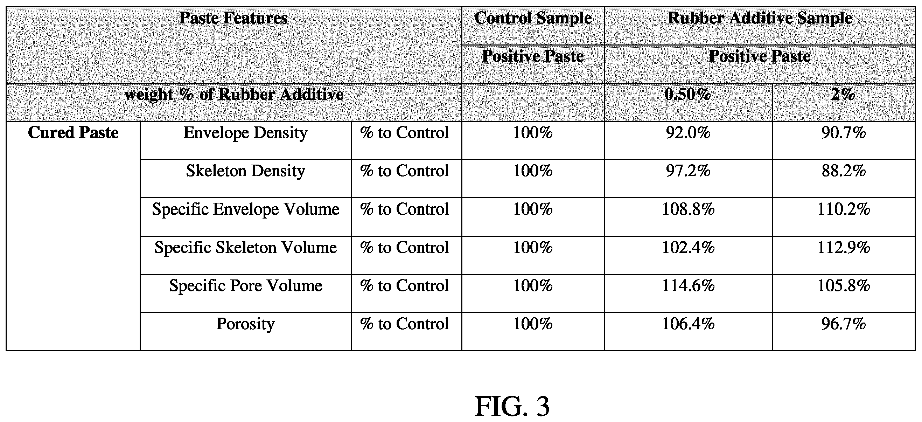

As shown in Figure 3, the envelope density is significantly reduced in the pastes containing a rubber additive. Additionally, the paste volumes have increased significantly more than control.

The positive paste containing a 0.5% dose of rubber additive reduces the skeleton density but provides less of an impact than the positive paste containing 2%.

The positive paste containing a 0.5% dose of rubber additive provides a higher porosity than the control. However, the positive paste containing 2% dose of rubber additive provides lower porosity.

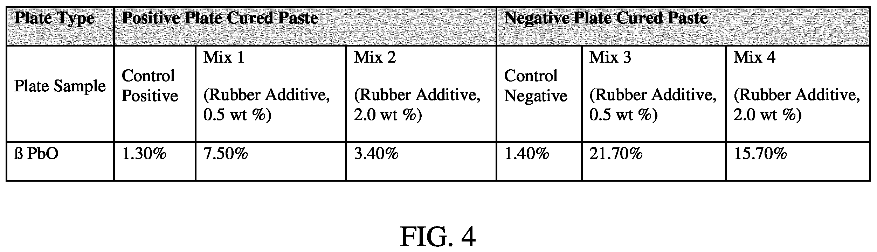

As shown in Figure 4, the B-PbO content is much higher in pastes containing a rubber additive than the control paste, particularly where the rubber additive is added to the negative active material (i.e., Mix-3 Negative Additive and Mix-4 Negative Additive), which may improve performance. The mixes containing a 0.5% dose of rubber additive seem to indicate an even higher β-Pb0 content than the mixes containing a 2% dose of rubber additive.

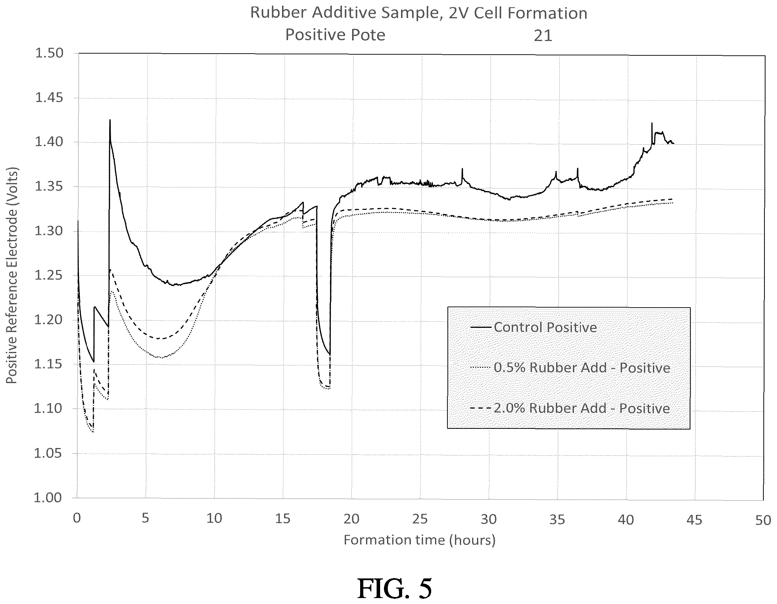

The half-cell formation data comparing cells with a rubber additive included in the positive active material to the control is shown in Figure 5. Due to the improved porosity and microstructure, the positive active material mixes with the rubber additive (Mix-1 Positive Additive and Mix-2 Positive Additive) exhibits lower polarization and higher efficiency, particularly in the first twenty-five percent (25%) of the formation period.

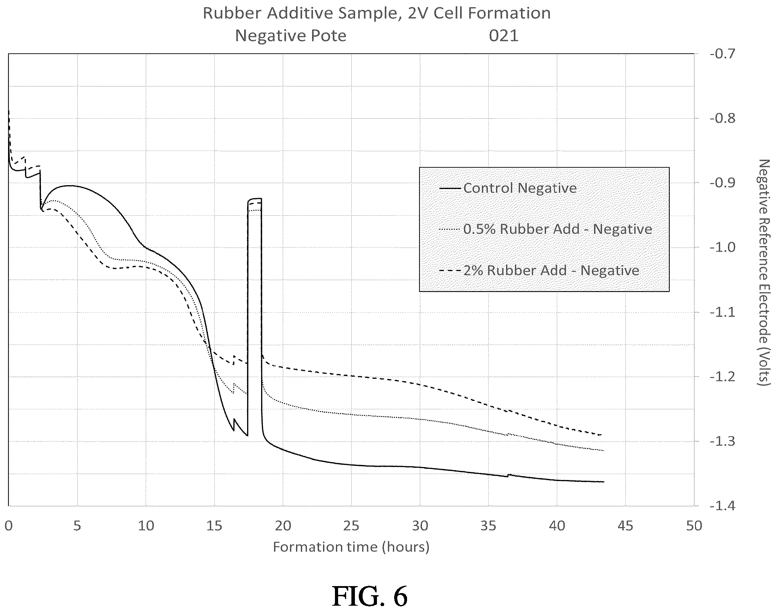

The half-cell formation data comparing cells with a rubber additive included in the negative active material to the control is shown in Figure 6. The negative plate potential where the negative active material includes the rubber additive (Mix-3 Negative Additive and Mix-4 Negative Additive) is depolarized, particularly in the second stage of formation.

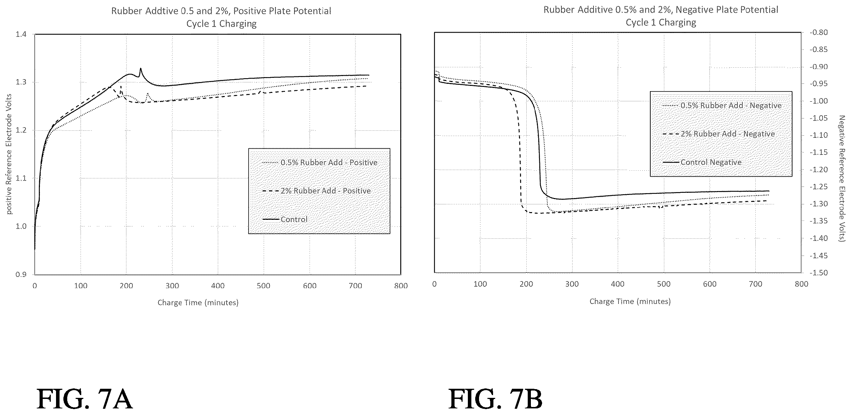

As shown in Figure 7A, cells with a rubber additive included in the positive active material exhibited higher charging efficiency than the control cells. The positive plates with a rubber additive are depolarized, which may lower the positive electrode potential, thereby causing less of an Oxygen Evolution Reaction (OER).

As shown in Figure 7B, cells with a rubber additive included in the negative active material exhibited higher charging efficiency than the control cells. The negative plates with a rubber additive are polarized, which may cause more of a Hydrogen Evolution Reaction (HER).

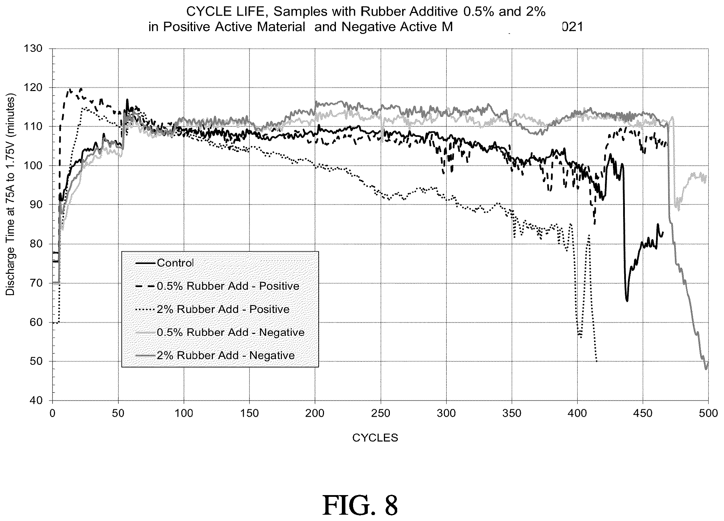

The cycle life of cells with a rubber additive in the active material in accordance with some embodiments of this disclosure, as compared to a control cell that does not include the rubber additive in the active material, is shown in Figure 8. Cells with a rubber additive included in the positive active material reached peak capacity much earlier than the control cells. Additionally, cells containing a 0.5% dose of rubber additive to the positive active material (Mix-1 Positive Additive) seem to be more stable and reach peak capacity even earlier than the cells containing a 2% dose of rubber additive to the positive active material (Mix-2 Positive Additive).

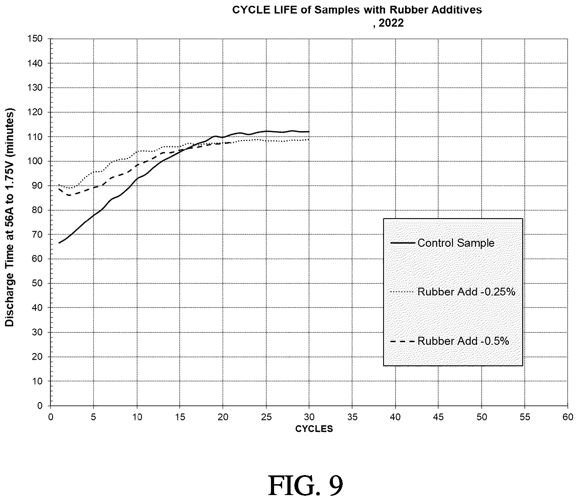

In another example, a rubber additive of 0.25% and 0.5% by weight of the total oxide weight were added to paste materials in forming of 2V cells. The cycle life of these cells with a rubber additive in the active material, as compared to a control cell that does not include the rubber additive in the active material, is shown in Figure 9. Cells with a rubber additive included in the active material reached peak capacity much earlier than the control cells. The initial capacities for the cells with a rubber additive appear to have increased by approximately thirty percent (30%) more than the control cells. Additionally, cells containing a 0.25% dose of rubber additive to the active material reach a higher initial capacity than the cells containing a 0.5% dose of rubber additive to the active material.

It should be understood that the foregoing description is only illustrative of the present disclosure. Various alternatives and modifications can be devised by those skilled in the art without departing from the present disclosure. Accordingly, the present disclosure is intended to embrace all such alternatives, modifications, and variances that fall within the scope of the claims.

## Claims

1. **Lead-acid battery** (10, 200) comprising:
at least one positive plate (70) comprising a positive electrode grid (20);
at least one negative plate (90) comprising a negative electrode grid (30);
active material paste (60, 80) comprising a rubber additive; and
an electrolyte (40).

2. Lead-acid battery of claim 1, wherein the active material paste (60) comprising a rubber additive is pressed onto at the least one positive plate (70).

3. Lead-acid battery of claim 1 or 2, wherein the active material paste (80) comprising a rubber additive is pressed onto the at least one negative plate (90).

4. Lead-acid battery of one of claims 1 to 3, wherein the rubber additive is a natural rubber.

5. Lead-acid battery of one of claims 1 to 4, wherein the rubber additive is a composite rubber.

6. Lead-acid battery of one of claims 1 to 5, wherein the rubber additive is powdered cross-linked rubber.

7. Lead-acid battery of one of claims 1 to 6, wherein the active material paste (60, 80) also comprises amorphous silica and sulfur.

8. Lead-acid battery of one of claims 1 to 7, wherein the lead-acid battery (10) is a vented lead acid battery as VLA (10,200).

9. Lead-acid battery of one of claims 1 to 8, wherein the lead-acid battery (200) is a valve regulated lead acid battery as VRLA.

10. Lead-acid battery of one of claims 1 to 9, wherein the range of weight percent for the rubber additive is between 0,01% up to 5% of the oxide load.

11. Lead-acid battery of claim 10, wherein the rubber additive has a particle size of 0,01 µm to 1000 µm.

12. **Plate** (70, 90) for a lead-acid battery (10, 200) of one of claims 1 to 11, the plate comprising:
an electrode grid (20, 30) made primarily of lead; and
a paste (60, 80) comprising a lead compound and rubber additive.

13. Plate of claim 12, wherein the rubber additive is powdered cross-linked rubber.

14. Plate of claim 12 or 13, wherein the range of weight percent for the rubber additive is between 0,01% up to 5% of the oxide load, preferably the rubber additive has a particle size of 0,01 µm to 1000 µm.

15. **Process of manufacturing** an active material paste for a lead-acid battery includes:
directly adding a rubber additive into a paste mixer with a lead compound to form a mix of additives;
dry mixing the additives to form a dry mixture;
adding water to the dry mixture;
wet-mixing the water with the dry mixture to form a wet mixture; and
pasting and curing an electrode grid with the wet mixture.
